# EUROPEAN PATENT APPLICATION

(11) **EP 3 667 232 A1**
(43) Date of publication of application: **17.06.2020**
(21) Application number: 18844780.9
(22) Date of filing: 02.08.2018
(51) Int. Cl.: G01C 7/04, G01C 15/00, G01S 17/89

(54) **LAND FEATURE DATA STRUCTURE**

(30) Priority: 09.08.2017 JP 2017154122
(71) Applicant: Pioneer Corporation, Tokyo 113-0021 (JP)
(72) Inventor: AMANO, Katsumi, Kawagoe-shi Saitama 350-8555 (JP); MATSUMOTO, Reiji, Kawagoe-shi Saitama 350-8555 (JP)
(74) Representative: Grünecker Patent- und Rechtsanwälte PartG mbB
(86) International application number: PCT/JP2018/028974
(87) International publication number: WO 2019/031373

(57) **Abstract**

Provided is a planimetric feature data structure that can suppress sensing leakage of a planimetric feature. The planimetric feature data stored in an external server (300) has a data structure including recognized information about a recognizable range in which the planimetric features can be recognized by the sensors (20A) to (20D). Thereby, a control unit 4 can determine whether or not a vehicle (100) is located within the recognizable range. Based on this, it is possible to cause the sensors (20A) to (20D) to perform sensing. Sensing leakage about a specific planimetric feature having such a planimetric feature data structure can be suppressed.

## Description

### Technical Field

The present invention relates to a planimetric feature data structure that indicates a planimetric feature.

### Background Art

In general, a moving object such as a vehicle may be provided with a sensor for recognizing a planimetric feature or another moving object located on or around the moving path. As such a moving object, one having a plurality of laser radars as sensors has been proposed (refer to, for example, Patent Literature 1). The moving object described in Patent Literature 1 measures on-road planimetric features by scanning a laser beam.

### Prior Art Document

### Patent Literature

Patent Literature 1: JP 2011-196916 A

### Summary of Invention

### Technical Problem

However, when the moving object moves, the planimetric features pass through the surroundings as viewed from the moving object. Therefore, in a moving object equipped with a laser radar as described in Patent Literature 1, if it is attempted to always measure on-road planimetric features during traveling, the data size of the measurement data becomes enormous. At this time, if the sensing accuracy and measurement frequency are reduced, the data size can be reduced, but there is a possibility that sensing leakages for important planimetric features may occur.

Therefore, an object of the present invention is to provide a planimetric feature data structure which can suppress sensing leakages about a specific planimetric feature as an example.

### Solution to Problem

According to a first aspect of the present invention, there is provided a planimetric feature data structure indicating a planimetric feature, including:
recognized information relating to a recognizable range in which the planimetric feature can be recognized by a sensor arranged in a moving object.

According to a second aspect of the present invention, there is provided a planimetric feature data transmission method including the steps of:
a storing step that stores planimetric feature data that indicates a planimetric feature, and includes recognized information relating to a recognizable range in which the planimetric feature can be recognized by a sensor arranged in a moving object;
a position information acquisition step that acquires position information of the moving object in which the sensor is arranged; and
a transmitting step that transmits the planimetric feature data to the moving object located around the planimetric feature based on the position information acquired by the position information acquisition step.

### Brief Description of Drawings

FIG. 1 is a block diagram showing an outline of a sensor control device according to an embodiment of the present invention and an external server communicating with the sensor control device;
FIG. 2 is a plan view showing a state in which the sensor control device is arranged in a moving object;
FIG. 3 is a side view showing a state in which the sensor control device is arranged in the moving object;
FIG. 4 is a flowchart showing an example of a procedure of sensor control processing executed by the sensor control device;
FIG. 5 is a graph showing the sensitivity of a sensor controlled by the sensor control device;
FIG. 6 is a flowchart illustrating an example of a procedure of planimetric feature data transmission processing executed by an external server; and
FIG. 7 is a flowchart illustrating an example of a procedure of second sensor control processing executed by the sensor control device.

### Description of Embodiments

Hereinafter, an embodiment of the present invention will be described. A planimetric feature data structure according to an embodiment of the present invention indicates a planimetric feature, and includes recognized information relating to a recognizable range in which the planimetric feature can be recognized by a sensor arranged in a moving object.

According to such a planimetric feature data structure of the present embodiment, an appropriate control unit can determine whether or not the moving object in which the sensor is arranged is located within the recognizable range. Based on this, the sensor can sense the planimetric feature. In other words, the sensor can acquire current information of the planimetric feature (for example, information indicating the shape of the planimetric feature, the presence or absence of the planimetric feature, etc.). In addition, when the moving object in which the sensor is arranged is located in the recognizable range, the sensor can surely sense the planimetric feature having the planimetric feature data structure. Therefore, sensing leakage of planimetric features can be suppressed. Whether or not the moving object is located within the recognizable range may be determined by the control unit of the moving object, or may be determined by the control unit of a device outside the moving object.

Preferably, the recognized information includes distance information relating to a distance from a position of the planimetric feature to a position of the sensor or the moving object, the distance enabling the sensor to recognize the planimetric feature. Thereby, it is possible to cause the sensor to sense the planimetric feature based on the distance information, and it is possible to suppress sensing leakage of the planimetric feature.

A planimetric feature data structure according to another embodiment of the present invention that indicates a planimetric feature, includes permission information for permitting or not permitting sensing of the planimetric feature by a sensor arranged in a moving object. According to such planimetric feature data structure of the present embodiment, sensing can be permitted to the sensor arranged on the moving object only for the planimetric feature that requires sensing. Thereby, the sensing leakage about a specific planimetric feature can be suppressed, reducing the amount of information which a sensor acquires. Note that the permission information for permitting or not permitting sensing may be unique to the planimetric feature, or may include a plurality of pieces of information that differ depending on conditions. That is, the planimetric feature data structure indicating a predetermined planimetric feature may include permission information that always permits or disallows sensing, or may include permission information for permitting or disallowing sensing depending on a spatial condition (for example, whether or not the sensor is positioned within the recognizable range). Further, it may include permission information that permits or disallows sensing execution according to a time condition (for example, time zone in a day or season), or may include permission information that permits or disallows sensing execution depending on a weather condition. When the moving object acquires (receives) the planimetric feature data having such a planimetric feature data structure, the control unit can control the sensor based on permission information that is permitted or not permitted for execution included in the planimetric feature data. In this way, it is possible to switch the sensing state of the sensor in accordance with the above-described spatial conditions, time conditions, and the like. In other words, sensing by the sensor can be executed only under conditions that allow sensing by the sensor.

In addition, as described above, if the permission information permits or disallows execution based on a predetermined condition, the moving object may determine whether or not the condition is satisfied by acquiring or storing the planimetric feature data structure in the moving object, or the storage device outside the moving object may store the planimetric feature data structure, so that the storage device may determine whether or not the condition is satisfied, and output an execution permission or non-permission signal to the moving object.

A map data creating method according to an embodiment of the present invention is a method of creating map data including the planimetric feature data structure as described above. According to such a map data creating method of the present embodiment, map data including the planimetric feature data structure as described above is created. Thus, by using such map data, it is possible to suppress a sensing leakage about a specific planimetric feature having a planimetric feature data structure.

A storage device according to an embodiment of the present invention is a storage device for storing planimetric feature data indicating a planimetric feature, and the planimetric feature data includes recognized information relating to a recognizable range in which the planimetric feature can be recognized by a sensor arranged in a moving object. According to such a storage device of the present embodiment, it is possible to suppress sensing leakage of a specific planimetric feature by storing the planimetric feature data including the recognized information.

Preferably, the storage device further includes a transmission unit that transmits the planimetric feature data to the moving object in which the sensor is arranged. Thereby, the moving object which received the planimetric feature data can determine whether or not the moving object is located within the recognizable range, and determine whether or not sensing is executed.

Preferably, the storage device further includes a position information acquisition unit that acquires position information of the moving object in which the sensor is arranged, and the transmission unit transmits the planimetric feature data to the moving object located around the planimetric feature based on the position information acquired by the position information acquisition unit. Thereby, the planimetric feature data is transmitted in advance to the moving object located in the vicinity of the planimetric feature (within a range wider than the recognizable range), and when the moving object further approaches the planimetric feature and enters the recognizable range, the sensor can sense the planimetric feature, and sensing leakage can be further suppressed. Also, by transmitting the planimetric feature data as necessary, the total transmission data size can be reduced as compared with a method of transmitting all the planimetric feature data in advance.

A planimetric feature data transmission method according to an embodiment of the present invention including the steps of: a storing step that stores planimetric feature data that indicates a planimetric feature, and includes recognized information relating to a recognizable range in which the planimetric feature can be recognized by a sensor arranged in a moving object; a position information acquisition step that acquires position information of the moving object in which the sensor is arranged; and a transmitting step that transmits the planimetric feature data to the moving object located around the planimetric feature based on the position information acquired by the position information acquisition step. According to the planimetric feature data transmission method of the present embodiment as described above, it is possible to suppress sensing leakage of a specific planimetric feature in the moving body that has received the planimetric feature data as described above.

Further, a planimetric feature data transmission program may cause a computer to execute the planimetric feature data transmission method as described above. In this way, sensing leakage about a specific planimetric feature can be suppressed using a computer.

Further, a computer-readable recording medium may store the planimetric feature data transmission program as described above. In this way, the program can be distributed as a single unit in addition to being incorporated into the device, and version upgrades can be easily performed.

### (Embodiment)

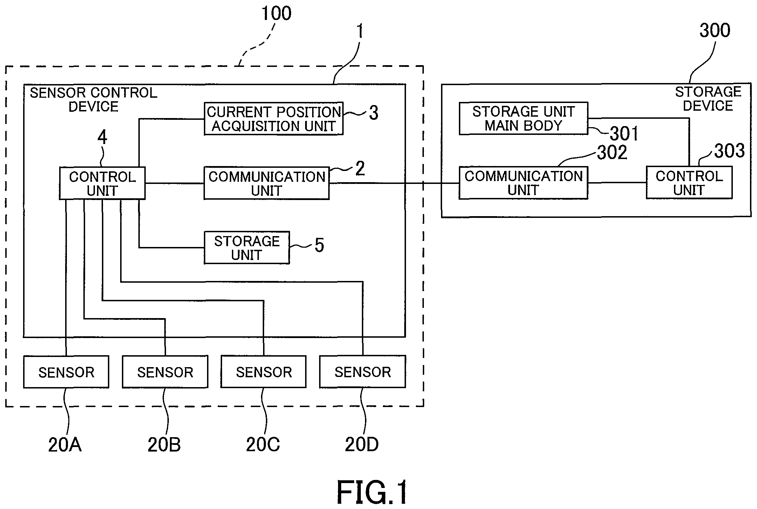

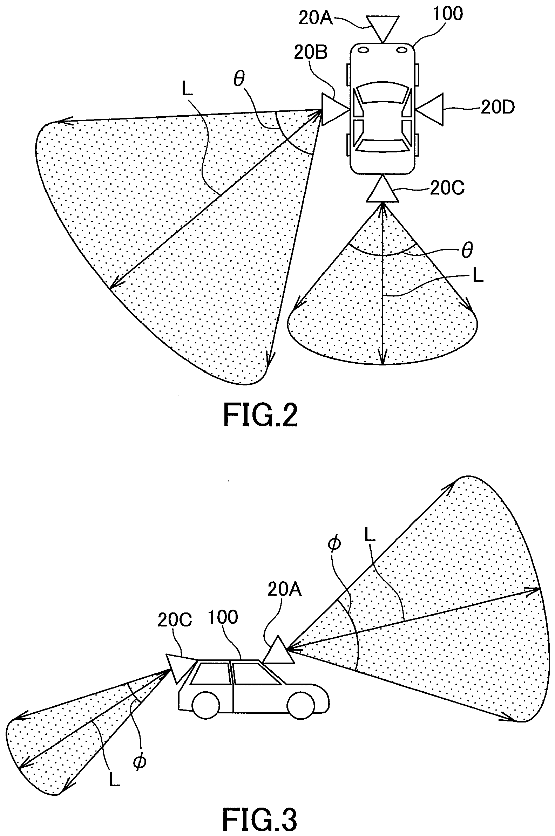

Hereinafter, an embodiment of the present invention will be specifically described below. The sensor control device 1 is disposed in a vehicle 100 as a moving object, and as shown in FIG. 1, is provided with a communication unit 2, a current position acquisition unit 3, a control unit 4, and a storage unit 5. In the present embodiment, as shown in FIGS. 2 and 3, a total of four sensors 20A to 20D are provided on each of the front, rear, left and right sides of the vehicle 100. Incidentally, the vehicle 100 may be a measurement vehicle for collecting road information and current information on planimetric features, or a general vehicle for the purpose of passenger movement, passenger transportation, and carriage.

The sensor control device 1 communicates with a storage device (external server) 300. The external server 300 includes a storage unit main body 301, a communication unit 302, and a control unit 303.

Each of the sensors 20A to 20D includes a projecting unit that projects an electromagnetic wave and a receiving unit that receives a reflected wave of the electromagnetic wave from an irradiation target (a planimetric feature to be described later). These sensors may be optical sensors (so-called LIDAR; Laser Imaging Detection and Ranging) that project light and receive reflected light from an irradiation object. In the following description, it is assumed that the sensors 20A to 20D are optical sensors. By processing the output signals output from the sensors 20A to 20D, it becomes possible to recognize the direction in which the laser light is projected and an object positioned closer than the longest recognition distance L according to the intensity of the laser light. Note that the longest recognition distance L means a distance at which the reflected light has an intensity that can be recognized by the light receiving unit when the irradiated laser light is reflected by the object and reaches the light receiving unit. Further, the sensors 20A to 20D each have a pair of an angle range θ in a direction in which laser light can be irradiated in a horizontal plane and an angle range φ in a direction in which laser light can be irradiated in the vertical direction. Accordingly, the recognizable range of each of the sensors 20A to 20D includes a fan-shaped area determined by the longest recognition distance L and the angle range θ in plan view, and a fan-shaped area determined by the longest recognition distance L and the angle range φ in front view and side view.

The longest recognition distance L and the angle ranges θ and φ as described above are stored in the storage unit 5 as a database. That is, the storage unit 5 stores recognizable range information regarding a range in which each sensor can acquire the current information of the planimetric feature (a range in which the sensor can recognize the planimetric feature) as sensor information regarding the sensors 20A to 20D. Note that the sensors 20A to 20D may have different performances, and the storage unit 5 stores sensor information for each of the sensors 20A to 20D.

Further, the storage unit 5 also stores detailed recognition range information regarding the approach recognition range in the recognizable range and the normal recognition range outside the approach recognition range in the recognizable range as sensor information. The approach recognition range is a range determined in consideration of the influence on the human body, and may be set as appropriate according to the performance of the sensors 20A to 20D. An example of sensor information stored in the storage unit 5 in this way is shown in Table 1.

**Table 1**

| | Recognizable range | | | Approach recognition range | | |
|---|---|---|---|---|---|---|
| | Longest recognition distance | Angle range | | Approach recognition distance | Angle range | |
| | | θ | φ | | θ ' | φ' |
| Sensor 20A | L1 | θ₁ | φ₁ | L1' | θ'₁ | φ'₁ |
| Sensor 20B | L2 | θ₂ | φ₂ | L1' | θ'₂ | φ'₂ |
| Sensor 20C | L3 | θ₃ | φ₃ | L1' | θ'₃ | φ'₃ |
| Sensor 20D | L4 | θ₄ | φ₄ | L1' | θ'₄ | φ'₄ |

Here, the control unit 4 may perform control to continuously change the recognition sensitivity of each of the sensors 20A to 20D. Alternatively, the control unit 4 may perform control for simply turning on and off each of the sensors 20A to 20D. Note that the recognition sensitivity is determined by the number of measurements when scanning a predetermined scan range (number of times the projection unit emits laser light per unit time), energy consumption per measurement (intensity of laser light irradiated by projection unit), and the like. That is, the greater the number of times of measurement (number of times of laser light irradiation) in a predetermined scan range, the higher the recognition sensitivity, and the greater the energy consumed per measurement (intensity of the laser beam to be irradiated), the higher the recognition sensitivity.

The communication unit 2 includes a circuit and an antenna for communicating with a network such as the Internet or a public line, and communicates with the external server 300 to transmit/receive information. The communication unit 2 acquires map information and planimetric feature information relating to the planimetric feature from the external server 300. The acquisition timing from the server 300 may be before the start of traveling of the vehicle or during traveling. The acquired map information and planimetric feature information may be stored in the storage unit 5. This planimetric feature information includes planimetric feature position information relating to the position of the planimetric feature. Further, as will be described later, the communication unit 2 outputs the current feature information acquired by the sensors 20A to 20D to the outside and functions as an external output unit.

Here, the planimetric feature is a concept including any natural or artificial object existing on the ground. Examples of the planimetric feature include an on-route planimetric feature located on the route (that is, a road) of the vehicle and a peripheral planimetric feature located on the periphery of the road. Examples of on-route planimetric features include road signs, traffic lights, guardrails, pedestrian bridges, and the like, including the road itself. That is, the characters and figures depicted on the road surface and the shape of the road (road width and curvature) are also included in the on-route planimetric feature. Moreover, Examples of peripheral planimetric features include a building (a house, a store) or a signboard located along a road. Further, the planimetric feature information is information relating to the above-described planimetric feature. Examples of information included in the planimetric feature information include planimetric feature location information that indicates the location of the planimetric feature (including planimetric location information that indicates the absence of the planimetric feature when the planimetric feature is removed), feature point information indicating features such as the shape of the planimetric feature obtained by analyzing images and images obtained by capturing the planimetric feature in advance, the change point information recording the change in the shape of the planimetric feature in the secular change of the planimetric feature, and the like. In other words, by using sensors, it becomes possible to acquire (collect) the current information of the planimetric feature, thereby recognizing the planimetric feature itself as well as recognizing changes in the planimetric feature, absence of the planimetric feature, etc.

The sensors 20A to 20D are sensors that can acquire current information of the planimetric feature by recognizing (detecting) the above-described planimetric feature. Recognition of planimetric features by the sensors 20A to 20D includes not only recognition of the outer shape of the planimetric feature, recognition of the surface of the planimetric feature, and the presence of the planimetric feature, but also recognition of changes in planimetric features and the removal of such planimetric features. For example, when the sensors 20A to 20D recognize a road sign as the planimetric feature, a figure written on the road sign may be recognized, or a surface state (such as paint peeling or fading) may be recognized. Moreover, the sensors may recognize states, such as that the direction of a marker is changing and the marker which should exist (it existed in the past) has been removed.

The current position acquisition unit 3 is a GPS receiving unit that receives radio waves transmitted from a plurality of GPS (Global Positioning System) satellites and obtains current position information of the vehicle 100 as known. In addition, the GPS receiving unit arranged in the vehicle as a part of navigation device may be used as the current position acquisition unit 3. Note that the positions of the sensors 20A to 20D may be the same as the current position of the vehicle, or may be calculated based on the current position information of the vehicle and information relating to the attachment location (arrangement location) in the vehicle. Information regarding the attachment location may be stored in advance in a memory or the like. That is, the current position acquisition unit 3 may function as a current position information acquisition unit by directly using the acquired current position information of the vehicle 100 as the current position information of the sensors 20A to 20D, and may function as a current position information acquisition unit by appropriately correcting the acquired current position information of the vehicle 100 and using the current position information of the sensors 20A to 20D.

The planimetric feature information acquired by the communication unit 2 from the external server 300 includes planimetric feature position information. The control unit 4 calculates the distance between the planimetric feature and the sensors 20A to 20D based on the planimetric feature position information included in the planimetric feature information acquired by the communication unit 2 and the current position information acquired by the current position acquisition unit 3. Note that when there is a deviation between the position of the planimetric feature estimated using the distance between the sensors 20A to 20D calculated using the output signals of the sensors 20A to 20D and the current position information acquired by the current position acquisition unit 3 and the planimetric feature and the planimetric feature position information included in the planimetric feature information, the current position information may be calibrated using the deviation amount.

The control unit 4 is configured by a CPU (Central Processing Unit) having a memory such as a RAM (Random Access Memory) or a ROM (Read Only Memory), for example, and governs overall control of the sensor control device 1. Further, the control unit 4 also acquires sensor information of the sensors 20A to 20D from the storage unit 5 and functions as a second acquisition unit.

The storage unit 5 is composed of, for example, a hard disk or a non-volatile memory, stores sensor information of the sensors 20A to 20D, map information and planimetric feature information acquired from the external server 300, a control program of the control unit 4, mathematical formulas and tables necessary for various calculations, and is read/written by control from the control unit 4.

The storage unit main body 301 of the external server 300 is configured by, for example, a hard disk or a non-volatile memory, stores the above-described map information and planimetric feature information, and is read/written by control from the control unit 303. In addition, the storage unit main body 301 may store the map information and the planimetric feature information separately as described above, or may store the map information integrally (that is, the planimetric feature information is included in the map information) due to the data structure of the storage. In addition, when acquiring the map data as described above, the sensor control device 1 does not necessarily need to acquire this from the external server 300, and packaged planimetric feature data may be pre-installed. Further, map data may be acquired when a planimetric feature data transmission process described later is executed.

The planimetric feature information stored in the storage unit main body 301 includes planimetric feature data. This planimetric feature data has a data structure (feature data structure) including at least one of recognized information about a recognizable range in which a planimetric feature can be recognized by a sensor, and permission information about permission or non-permission of sensing by a sensor. The recognizable range indicates a range where it is predicted that the planimetric feature can be recognized when the sensor is in the recognizable range. The recognizable range is set according to, for example, the size of the planimetric feature, the shape of the planimetric feature, the position of the planimetric feature (for example, the height from the ground), the reflectance of the planimetric feature with respect to the electromagnetic wave (for example, light), and the like. Note that the recognized information may at least include information about the longest distance. That is, a circular two-dimensional area within the longest distance centered on the planimetric feature may be a recognizable range, or a spherical three-dimensional area within the longest distance centering on the planimetric feature may be the recognizable range. Note that the recognizable range is not limited to a circle or a sphere, but may be a shape obtained by changing a circle or a sphere according to the shape of the planimetric feature. Further, in addition to the longest distance, the recognizable range may be set according to the arrangement of the planimetric features. For example, for a planimetric feature arranged along a road, a recognizable range may be set only on the road side to form a semicircular or hemispherical recognizable range. In addition, for a planimetric feature with front and back such as a signboard, a recognizable range may be set only on the surface side, and a semicircular or hemispherical recognizable range may be set. Further, the recognized information may be one piece of information for each planimetric feature or a plurality of pieces of information. For example, the range in which the sensor can recognize a planimetric feature varies depending on the type and specs of the assumed sensor. For this reason, the planimetric feature data may include a plurality of pieces of recognized information indicating different recognizable ranges depending on the type and specifications of the sensor.

The permission information is information indicating whether the sensor is permitted to recognize the planimetric feature information. An example of the permission information is information that allows sensing to be performed when the vehicle 100 (or the sensors 20A to 20D) is located in the recognizable range, and prohibits sensing when the vehicle 100 is not located in the recognizable range. Such a planimetric feature data structure is created by the time of execution of the second sensor control process described later, and is stored in the storage unit main body 301 as a part of the map information or the planimetric feature information (storage step). Note that the planimetric feature data structure does not have to be created for all the planimetric features, but may be created for planimetric features that are to be preferentially measured by the sensors 20A to 20D (that is, have high importance). For example, when a moving object in which a sensor is arranged performs self-position estimation, the estimation accuracy may be improved by using information on a result of sensing the surrounding planimetric features by the sensor. In this case, the result of sensing road signs arranged at appropriate intervals on the road may be used. Therefore, it is desirable that the planimetric feature data structure showing the road sign preferentially with respect to other features is configured as described above.

As an example of a method for determining the importance of a planimetric feature, it may be determined depending on the sensing purpose. For example, there are methods in which when sensing for the purpose of acquiring road information, the importance of on-route planimetric features such as signs and traffic lights is increased, and when sensing for the purpose of acquiring facility information around the road, the importance of surrounding planimetric features such as buildings (houses, stores) and signboards is increased. It is possible to determine the importance of the planimetric feature by other methods.

The communication unit 302 includes a circuit and an antenna for communicating with a network such as the Internet or a public line, and communicates with the communication unit 2 of the sensor control device 1 provided in each of the plurality of vehicles 100 to transmit and receive information. At this time, the external server 300 acquires the current position information acquired by the sensor control device 1 by the current position acquisition unit 3 through communication between the communication unit 302 and the communication unit 2. Accordingly, the communication unit 302 functions as a position information acquisition unit that acquires position information of the vehicle 100 in which the sensors 20A to 20D are arranged.

Further, the external server 300 transmits the planimetric feature data to the sensor control device 1 as described later by communication between the communication unit 302 and the communication unit 2. Accordingly, the communication unit 302 functions as a transmission unit that transmits the planimetric feature data to the vehicle 100 in which the sensors 20A to 20D are arranged.

The control unit 303 is configured by a CPU (Central Processing Unit) having a memory such as a RAM (Random Access Memory) and a ROM (Read Only Memory), and controls the external server 300 as a whole.

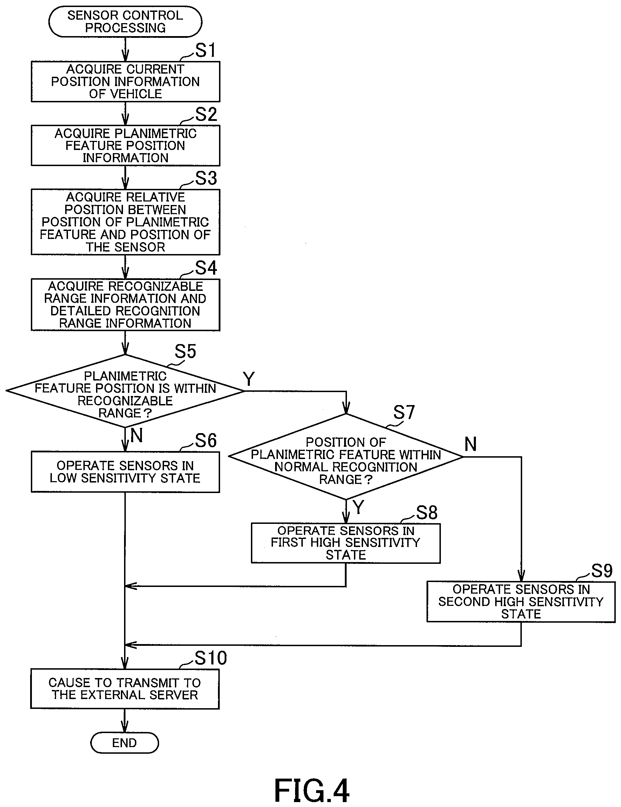

Here, the procedure in which the control unit 4 executes the sensor control process shown in FIG. 4 will be described. While the vehicle is traveling, the control unit 4 executes the sensor control process at an appropriate timing (for example, every time a predetermined time elapses or every time the vehicle travels a predetermined distance). Note that the sensor control process may be executed independently for each of the sensors 20A to 20D. In the sensor control process, the control unit 4 first acquires the current position information of the vehicle by the current position acquisition unit 3 (step S1). Next, the control unit 4 extracts, from the planimetric feature information stored in the storage unit 5 (that is, as will be described later, planimetric feature information acquired and stored in advance from the external server 300), planimetric feature information indicating the planimetric feature predicted to exist around the current position, and acquires the planimetric feature position information included in the planimetric feature information (step S2). Here, in step S2, the control unit 4 may extract planimetric feature non-existence information indicating that the planimetric feature has been removed as planimetric feature information around the current position, and may acquire planimetric feature position information (information of a position where no planimetric feature exists). Next, the control unit 4 calculates a relative position between the position indicated by the planimetric feature position information and the position of the sensor based on the planimetric feature position information and the current position information (distance between the position indicated by the planimetric feature position information and the sensor position) (step S3, first acquisition step). Next, the control unit 4 acquires recognizable range information and detailed recognition range information from the storage unit 5 (step S4, second acquisition step).

Next, the control unit 4 determines whether or not the position indicated by the planimetric feature position information is within the recognizable range based on the calculated relative position (step S5). When the position indicated by the planimetric feature position information is outside the recognizable range (N in Step S5), the control unit 4 operates the sensors 20A to 20D in the low sensitivity state to acquire the sensor acquisition information (Step S6, control process).

On the other hand, when the position indicated by the planimetric feature position information is located within the recognizable range (Y in step S5), the control unit 4 determines whether or not the position indicated by the planimetric feature position information is within the normal recognition range (step S7). When the position indicated by the planimetric feature position information is within the normal recognition range (Y in step S7), the control unit 4 operates the sensors 20A to 20D in the first high sensitivity state to acquire the sensor acquisition information (step S8, control process). On the other hand, when the position indicated by the planimetric feature position information is located outside the normal recognition range (that is, located within the approach recognition range) (N in step S7), the control unit 4 operates the sensors 20A to 20D in the second high sensitivity state to acquire the sensor acquisition information (step S9, control process).

The control unit 4 holds the sensor acquisition information acquired in steps S6, S8, and S9 in the storage device provided in the sensor control device 1 as it is, or causes the communication unit 2 to transmit to the external server 300 (step S10), and the sensor control process is terminated. When the sensor acquisition information is stored in the storage device, the sensor acquisition information is collectively uploaded to the external server after the travel is completed.

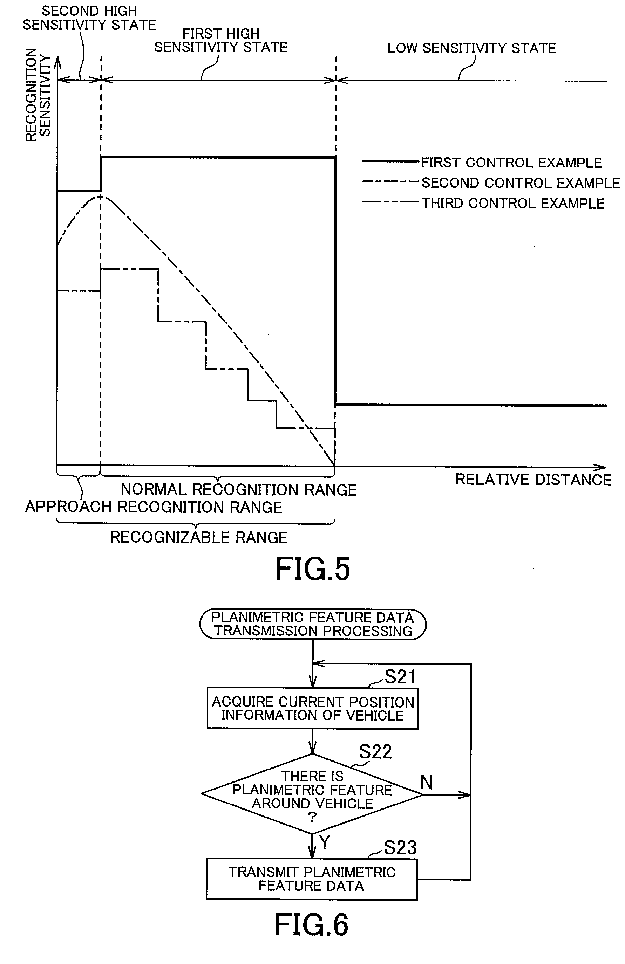

Here, specific examples of the high sensitivity state and the low sensitivity state will be described with reference to FIG. 5. In FIG. 5, the horizontal axis is the distance (relative distance) between the sensors 20A to 20D and the planimetric feature, the vertical axis is the recognition sensitivity of the sensors 20A to 20D, the first control example is indicated by a solid line, the second control example is indicated by a broken line, the third control example is indicated by a one-dot chain line, and the fourth control example is indicated by a two-dot chain line. Note that in FIG. 5, the relationship between the planimetric feature information and the sensitivity state is shown only for the distance, however, it is assumed that the position indicated by the planimetric feature position information is located within the angular range in the direction in which the laser beam can be irradiated.

First, in the first control example, the recognition sensitivity is substantially constant in each of the first high sensitivity state, the second high sensitivity state, and the low sensitivity state, and is not zero in the low sensitivity state (that is, the sensors 20A to 20D are working). Further, the recognition sensitivities in the first high sensitivity state and the second high sensitivity state are higher than the recognition sensitivity in the low sensitivity state, and the recognition sensitivity in the first high sensitivity state is higher than the recognition sensitivity in the second high sensitivity state.

In the second control example, the recognition sensitivity increases as the relative distance decreases in the first high sensitivity state, decreases as the relative distance decreases in the second high sensitivity state, and is zero in the low sensitivity state. Further, in the first high sensitivity state and the second high sensitivity state, the recognition sensitivity graph has an upward convex curve.

In the third control example, the recognition sensitivity increases stepwise (discontinuously) as the relative distance decreases in the first high sensitivity state, is substantially constant in the second high sensitivity state, and is zero in the low sensitivity state.

As shown in the above first to third control examples, the recognition sensitivity may change according to the relative distance in each sensitivity state, or may be substantially constant. Moreover, when the recognition sensitivity changes according to the relative distance, the mode of the change may be set arbitrarily. Further, in the low sensitivity state, the recognition sensitivity may be zero and the sensors 20A to 20D may be turned off (do not operate), or the recognition sensitivity may not be zero and the sensors 20A to 20D may operate. Further, the shape of the graph in each control example may be a straight line, a curve, or a multidimensional polynomial other than the shape shown in FIG. 5.

Next, a procedure in which the control unit 303 of the external server 300 executes the planimetric feature data transmission process shown in FIG. 6 will be described. The control unit 303 always executes the planimetric feature data transmission process for all the corresponding sensor control devices 1 during the operation of the external server 300. First, the control unit 303 acquires current position information of the vehicle 100 in which the sensors 20A to 20D are arranged (step S21, position information acquisition step). Next, the control unit 303 determines whether or not there is a planimetric feature around the vehicle 100 (step S22). As a specific example of this determination, the control unit 303 determines whether there is planimetric feature position information included within a predetermined range from the position indicated by the current position information of the vehicle 100 acquired in step S21. Here, "within a predetermined range" refers to a range wider than the recognizable range of the planimetric feature. That is, when the predetermined range and the recognizable range are circles (or spheres), it means that the radius of the circle (or sphere) formed by the predetermined range is longer than the radius of the circle (or sphere) formed by the recognizable range. Further, in step S22, the determination may be made based only on the current position of the vehicle 100, or may be made based also on the moving direction of the vehicle 100. For example, even when the position indicated by the planimetric feature position information of certain planimetric feature information is included within a predetermined range from the current position of the vehicle 100, if the vehicle 100 is moving away from the planimetric feature, it may be determined that the feature is not located around the vehicle 100.

When there is a planimetric feature around the vehicle 100 (Y in step S22), the control unit 303 transmits the planimetric feature data of the planimetric features existing in the vicinity of the vehicle 100 stored in the storage unit main body 301 to the sensor control device 1 (step S23, transmission process), and returns to step S21 again. On the other hand, when there is no feature around the vehicle 100 (N in step S22), the control unit 303 returns to step S21 again. In this way, by transmitting the planimetric feature data to the sensor control device 1, the sensor control device 1 can sense a specific target planimetric feature and acquire current information. When acquiring the planimetric feature data from the external server 300, for example, the control unit 4 of the sensor control device 1 operates the sensors 20A to 20D in steps S5 to S9 of the sensor control process described above by making a determination based on the planimetric feature data. That is, the control unit 4 may operate the sensors 20A to 20D based on the current position information and the recognized information or permission information included in the acquired planimetric feature data.

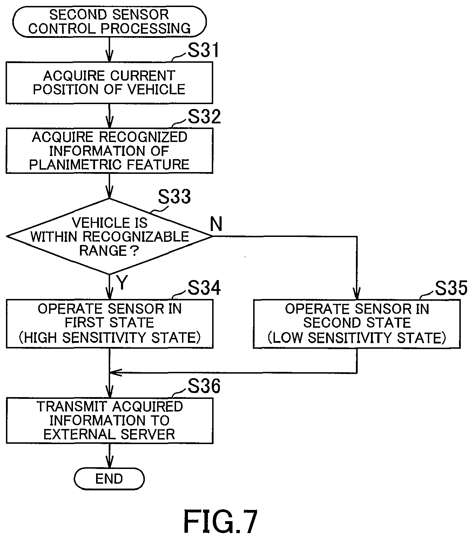

FIG. 7 shows an example of the procedure of the second sensor control process in which the control unit 4 controls the sensors 20A to 20D when the planimetric feature data is acquired from the external server 300 as described above. In the second sensor control process, the control unit 4 first acquires the current position information of the vehicle by the current position acquisition unit 3 (step S31). Next, the control unit 4 acquires recognized information of the planimetric feature from the external server 300 (step S32). In step S32, the recognized information of the planimetric feature may be acquired by executing step S23 in the planimetric feature data transmission process described above. Next, the control unit 4 determines whether or not the vehicle is located within the recognizable range (step S33). When the vehicle is located within the recognizable range (Y in step S33), the control unit 4 operates the sensors 20A to 20D in the first state (for example, the above-described high sensitivity state). On the other hand, when the vehicle is located outside the recognizable range (N in step S33), the control unit 4 operates the sensors 20A to 20D in the second state (for example, the low sensitivity state described above).

The control unit 4 holds the sensor acquisition information acquired in steps S34 and S35 as it is in the storage device provided in the sensor control device 1, or causes the communication unit 2 to transmit to the external server 300 (step S36), and the second sensor control process is terminated. When the sensor acquisition information is stored in the storage device, the sensor acquisition information is collectively uploaded to the external server after the travel is completed.

With the above configuration, the planimetric feature data stored in the external server 300 has a data structure including recognized information relating to a recognizable range in which the planimetric features can be recognized by the sensors 20A to 20D. Thus, the control unit 4 can determine whether or not the vehicle 100 is located within the recognizable range, and based on this, the planimetric feature information can be sensed by the sensors 20A to 20D. In addition, when the moving body in which the sensor is arranged is located in the recognizable range, the planimetric feature having the planimetric feature data structure can be surely sensed by the sensor, and sensing leakage about a specific planimetric feature having such a planimetric feature data structure can be suppressed.

Furthermore, since the planimetric feature data has a data structure including permission information about permission or non-permission of sensing by the sensors 20A to 20D, sensing can be performed based on the permission information.

Further, by transmitting the planimetric feature data in advance to the vehicle 100 located around the planimetric feature, the planimetric feature information can be sensed by the sensors 20A to 20D when the vehicle 100 further approaches the planimetric feature and enters the recognizable range, and the sensing leakage can be further suppressed. Also, by transmitting the planimetric feature data as necessary, the total transmission data size can be reduced as compared with a method of transmitting all the planimetric feature data in advance.

In addition, the present invention is not limited to the embodiments above, and includes other configurations that can achieve the object of the present invention, and modifications such as those shown below are also included in the present invention.

For example, in the above embodiment, the external server 300 acquires the position information of the vehicle 100 and transmits the planimetric feature data to the vehicle 100 located around the planimetric feature. However, the feature data may be transmitted regardless of the position of the vehicle 100. That is, a plurality of planimetric feature data may be periodically transmitted from the external server 300 to the vehicle 100. At this time, all stored planimetric feature data may be sent together, or the planimetric feature data in a specific area (for example, an area including a point registered as a home in the navigation system mounted on the vehicle 100) may be transmitted collectively.

Further, the external server 300 may not transmit planimetric feature data to the vehicle 100. That is, the external server 300 acquires the position information of the vehicle 100 and the control unit 303 determines whether the vehicle 100 is located within the recognizable range, and only signals regarding whether or not to perform sensing by the sensors 20A to 20D may be transmitted to the vehicle 100.

In the above-described embodiment, the planimetric feature data has a data structure including permission information about permission or non-permission of sensing by the sensors 20A to 20D. However, the control unit 4 of the vehicle 100 may determine whether or not to perform sensing. That is, the vehicle 100 may receive only the recognized information, and sensing may be performed or not by the vehicle 100 itself determining whether or not the vehicle has entered the recognizable range.

In the above embodiment, the specific planimetric feature has the planimetric feature data including the recognized information. However, the content of the planimetric feature data may be variable. That is, when a certain planimetric feature is sensed multiple times and sufficient information is collected, the importance of this planimetric feature decreases. Therefore, the planimetric feature data may be deleted for this planimetric feature. If there is a planimetric feature that has not been sensed for a long time, planimetric feature data may be created for this planimetric feature.

Moreover, in the above embodiment, based on permission information, the control unit shall switch permission or non-permission of sensing. The planimetric feature data may include multiple pieces of permission information that permit or non-permit sensing depending on conditions such as spatial information, temporal conditions, and weather conditions, or may be unique to the feature (that is, there is no need to switch permission or non-permission according to the above-mentioned conditions).

For example, when a store is a planimetric feature, it may be difficult to obtain information on the appearance of the store because the shutter is closed outside business hours. Therefore, the planimetric feature data indicating the store may include permission information that permits sensing during business hours and that does not permit sensing outside business hours. Further, when the road surface is a planimetric feature, the road surface state may change depending on rainfall, snowfall, temperature, and the like. Therefore, the planimetric feature data indicating the road surface may include permission information that permits sensing if the weather can change the road surface condition, and that does not permit sensing if the weather does not change the road surface state. In addition, planimetric feature data indicating important planimetric features such as road signs may include permission information that always permits sensing. The planimetric feature data including planimetric features that do not change the appearance and do not need to collect new information over time (for example, public buildings, statues, lighthouses on the route), and planimetric features (for example, trees with different leaves depending on the season) for which useful information cannot be obtained by sensing (sensing results are not stable) may include permission information that always does not permit sensing.

Moreover, in the above embodiment, the sensor control device 1 which communicates with the external server 300 is arranged in the vehicle as a moving object. However, the moving object that communicates with the external server 300 may be a ship or an aircraft. The planimetric feature that is the recognition target of the sensor may be any suitable feature according to the path of the moving object that communicates with the external server 300.

Further, in the above embodiment, the sensors 20A to 20D are optical sensors. However, the present invention is not limited to this, and sound waves or electromagnetic waves may be used.

In addition, the best configuration, method and the like for carrying out the present invention have been disclosed in the above description, but the present invention is not limited to these. That is, the present invention has been illustrated and described with particular reference to particular embodiments. However, those skilled in the art can make various modifications to the above-described embodiments in terms of shape, material, quantity, and other detailed configurations without departing from the scope of the technical idea and object of the present invention. Therefore, the description limited to the shape, material, etc. disclosed above is exemplary for easy understanding of the present invention, and does not limit the present invention. Therefore, the description of the names of members excluding some or all of the limitations on the shape, material and the like is included in the present invention.

### Reference Signs List

- 300: external server (storage device)
- 302: communication unit (transmission unit)
- 20A to 20D: sensor
- 100: vehicle (moving object)

## Claims

1. A planimetric feature data structure indicating a planimetric feature, comprising:
recognized information relating to a recognizable range in which the planimetric feature can be recognized by a sensor arranged in a moving object.

2. The planimetric feature data structure as claimed in claim 1,
wherein the recognized information includes distance information relating to a distance from a position of the planimetric feature to a position of the sensor or the moving object, the distance enabling the sensor to recognize the planimetric feature.

3. A map data creating method comprising the step of:
creating map data including the planimetric feature data structure as claimed in claim 1.

4. A storage device for storing planimetric feature data indicating a planimetric feature,
wherein the planimetric feature data includes recognized information relating to a recognizable range in which the planimetric feature can be recognized by a sensor arranged in a moving object.

5. The storage device as claimed in claim 4, further comprising:
a transmission unit that transmits the planimetric feature data to the moving object in which the sensor is arranged.

6. The storage device as claimed in claim 5, further comprising:
a position information acquisition unit that acquires position information of the moving object in which the sensor is arranged,
wherein the transmission unit transmits the planimetric feature data to the moving object located around the planimetric feature based on the position information acquired by the position information acquisition unit.

7. A planimetric feature data structure indicating a planimetric feature, comprising:
permission information for permitting or not permitting sensing of the planimetric feature by a sensor arranged in a moving object.

8. A planimetric feature data transmission method comprising the steps of:
a storing step that stores planimetric feature data that indicates a planimetric feature, and includes recognized information relating to a recognizable range in which the planimetric feature can be recognized by a sensor arranged in a moving object;
a position information acquisition step that acquires position information of the moving object in which the sensor is arranged; and
a transmitting step that transmits the planimetric feature data to the moving object located around the planimetric feature based on the position information acquired by the position information acquisition step.

9. A planimetric feature data transmission program that causes a computer to execute the planimetric feature data transmission method as claimed in claim 8.

10. A computer-readable recording medium that stores the planimetric feature data transmission program as claimed in claim 9.
